# EUROPÄISCHE PATENTSCHRIFT

(11) **EP 1 270 967 B1**
(45) Veröffentlichungstag und Bekanntmachung des Hinweises auf die Patenterteilung: **31.05.2006**
(21) Anmeldenummer: 02007635.2
(22) Anmeldetag: 04.04.2002
(51) Int. Cl.: F16C 7/02, F16D 23/14

(54) **Pleuelstange mit einem verbundenen oberen Pleuelkopf**
Connecting rod with an upper connected rod eye
Bielle avec une extrémité supérieure rapportée

(30) Priorität: 19.06.2001 DE 10129559
(43) Veröffentlichungstag der Anmeldung: 02.01.2003
(73) Patentinhaber: Caterpillar Motoren GmbH & Co. KG, 24159 Kiel (DE)
(72) Erfinder: Heintze, Wolfgang, Dipl.-Ing., 24119 Kronshagen (DE)
(74) Vertreter: Klang, Alexander H.

(56) Entgegenhaltungen:
- DD-A- 111 965
- DE-A- 2 022 461
- DE-A- 2 031 510
- PATENT ABSTRACTS OF JAPAN Bd. 0121, Nr. 34 (M-689), 23. April 1988 (1988-04-23) -& JP 62 255610 A (TECH RES ASSOC HIGHLY RELIAB MARINE PROPUL PLANT), 7. November 1987 (1987-11-07)

## Beschreibung

Pleuelstange mit einem verbundenen Pleuelkopf, der auf einem Kolbenbolzen eines Motorkolbens einer Brennkraftmaschine, insbesondere eines Dieselmotors, gehalten ist, wobei Pleuelstange und Pleuelkopf über zugeordnete Befestigungsflansche durch Schrauben verbunden sind.

Aus der DE 33 17 784 C2 ist eine einteilige Pleuelstange mit einem aus zwei Lagerteilen zusammengesetzten großen unteren Pleuelauge bekannt, das mit einer Kurbelwelle verbunden ist und die ein oberes kleines Pleuelauge aufweist, das auf einem Kolbenbolzen gelagert ist.

Ferner ist nach der DE-198 01 200 C2 eine Pleuelstange bekannt, in der durch Kammern und Bohrungen gebildete ölführende Räume, insbesondere um den Umfang der Lagerhülse, vorhanden sind, die von einem Kurbelzapfen und dort vorhandene Ölzuführkanälen aus mit Öl durchströmt sind sowie auch die Lagerhülse den Kurbelzapfen unter Ausbildung eines Restspaltes im Gleitkontakt umgreift.

Weiterhin ist nach der DD 111 965 gemäß dem Oberbegriff von Anspruch 1 eine mehrteilige Treibstange mit einem Kolbenbolzen- und einem Kurbelzapfenlager sowie einer weiteren Trennfläche im Bereich des Kurbelzapfenlagers und einer Trennfläche, die mittels Schrauben zusammengehalten sind, bekannt. Hierbei ist die Trennfläche im Treibstangenschaft etwa in der Mitte zwischen dem Kurbelzapfenlager und dem Kolbenbolzenlager angeordnet und die Schrauben dieser Trennfläche umgeben den Treibstangenschaft allseitig.

Es ist außerdem nach der DE 2031 510 C bekannt, Schubstangen für Kurbeltriebwerke auf ihrer ganzen der Wechselbeanspruchung unterworfenen Ringe unter eine Druckspannung anzuordnen, die die im Betrieb auftretenden Zugspannungen mindestens teilweise aufhebt.

Nach der Veröffentlichung Patent Abstracts of Japan Bd. 0121, Nr. 34 (M-689), 23. April 1988 (1988-04-23)- & JP 622555610 A (Tech Res Assoc Highly Reliab Marine Propul Plant), 7. November 1987 (1987-11-07) ist eine mehrteilige Anwendung mit einer Pleuelstange und einem Pleuelkopf bekannt, wobei alle Elemente durch Schrauben fest miteinander verbunden sind. Es werden hierbei keine Druckspannungen im kritischen Bereich des Pleuelauges eingestellt, um eine Abrißgefahr zu vermeiden. Die Anwendung dient im wesentlichen der Reduktion der Bolzen zum Zusammenhalt der einzelnen Elemente.

Aufgabe der Erfindung ist es, eine Pleuelstange mit einem oberen Pleuelkopf mit Pleuelauge zur Lagerung auf einem Kolbenbolzen zu schaffen, der in einfacher Weise mit der Pleuelstange verbindbar ist und neben einer hohen Zünddrucktauglichkeit auch gegebenenfalls eine optimale Zuführung von Schmiermittel besitzt.

Die Lösung dieser Aufgabe erfolgt erfindungsgemäß durch die Merkmalskombination des Anspruches 1.

Weitere vorteilhafte Ausgestaltungen sind durch die Merkmale der Unteransprüche gekennzeichnet.

Die mit der Erfindung hauptsächlich erzielten Vorteile bestehen darin, daß eine Ausführung eines Pleuelkopfes in zweigeteilter Bauart mit der Pleuelstange in vorteilhafter Weise eine optimale Verbindung unter Vorspannung des Pleuelkopfes mit der Pleuelstange unter Vorspannung gewährleistet. Hierzu ist die Pleuelstange mit dem Pleuelkopf über mindestens zwei vorspannbare Gawindestangen verbunden.
Diese Gewindestangen erstrecken sich zu beiden , Seiten des Pleuelauges durch Versteifungsrippen des Pleuelkopfes durchgehend vom oberen freien Ende der Pleuelstange bis zum oberen Bereich des Pleuelknopfes. Die Schrauben sind in einer quer zur Lagerbohrung des Pleuelauges angeordneten Mittenebene angeordnet, wobei die durchgehenden Schrauben im oberen Kopfbereich des Pleuelknopfes über einen Gewindeabschnitt festlegbar sind.

Insbesondere ist der Pleuelkopf einteilig mit einem Befestigungsflansch für die Pleuelstange ausgebildet und in einem umfangseitigen Freiraum zwischen dem Pleuelkopf und diesem Befestigungsflansch sind mindestens die zwei gegenüberstehenden Versteifungsrippen angeformt, in denen Durchgangsbohrungen für die Gewindestangen vorgesehen sind, deren Durchmesser größer als die Gewindestangen sind und zusätzlich als Zuführungskanäle für Schmiermittel und dgl. ausgebildet sind.

Hierdurch wird in vorteilhafter Weise insbesondere mit den zwei durchgeführten Gewindestangen und weiteren kurzen Schrauben im Verbindungsbereich eine gewisse Vorspannung zwischen Pleuelkopf und Pleuelstange erzielt, wobei dies von den Versteifungsrippen begünstigt wird. Die durchgeführten Gewindestangen bestehen vorzugsweise aus sogenannten Dehnschrauben, die elastisch vorgespannt einbaubar sind

Der Pleuelkopf besteht vorzugsweise aus einem kreisförmigen Segment, welches über einen unteren Umfangsbereich am Befestigungsflansch angeformt ist, wobei die Versteifungsrippen in einer Mittenquerebene des Pleuelkopfes verlaufen. Durch diese Ausführung des Pleuelknopfes wird aufgrund dieser beiden angeformten Rippen ein gewichtsmäßig relativ leichter Pleuelkopf geschaffen, dem durch weitere Zuführungskanäle im Pleuelkopf Schmieröl oder dgl. zugeleitet werden kann.

Die Vorspannung der durchgeführten Gewindestangen wird dadurch erzielt, indem sich diese mit ihrem unteren freien Ende an einem Befestigungsflansch der Pleuelstange abstützen und jeweils über eine Schraubenmutter vorspannbar sind. Zwischen diesen durchgeführten langen Gewindestangen sind weitere kürzere Schrauben angeordnet, welche die Befestigungsflansche der Pleuelstange und des Pleuelkopfes unmittelbar miteinander verbinden. Somit kann das Verbinden des Pleuelkopfes mit der Pleuelstange in der Weise erfolgen, daß zuerst die langen Gewindestangen in den Gewindeabschnitten des Pleuelkopfes eingeschraubt werden und danach die Pleuelstange angesetzt und über Schraubenmuttern vorgespannt werden. Durch diese quasi elastische Vorspannung der Verbindung wird ein Abreißen des Pleuelkopfes von der Pleuelstange im Motorbetrieb vermieden sowie eine bessere Pressungsverteilung zwischen den Flanschflächen erreicht. Ferner werden gefährliche Mikrobewegungen unterbunden.

Die Ausführung des Pleuelkopfes zur Aufnahme des Kolbenbolzens ist so gestaltet, daß ein an den Versteifungsrippen und dem Befestigungsflansch angeformter Kreisabschnitt des Pleuelkopfes eine Lagerbohrung derart aufweist, daß die untere Hälfte der Lagerbohrung länger ist als die oberhalb der Rippe ausgebildete weitere Hälfte der Lagerbohrung im oberen Kreisabschnitt des Pleuelkopfes.

Hierdurch wird im Hauptbelastungszustand des Kolbens eine optimale Lagergestaltung im Pleuelkopf erzielt, zumal zur Lagerung des Kolbenbolzens keine Lagerbuchse verwendet wird, sondern die Lagerbohrung mit Bleibronze ausgegossen wird.

Die als Zuführungskanäle ausgebildeten Bohrungen für die durchgeführten Gewindestangen sind jeweils mit einem Zuführungskanal von der Pleuelstange sowie einem weiteren Kanal im Pleuelkopf verbunden, der im Bereich der Versteifungsrippen in den von den Bohrungen gebildeten Zuführungskanäle einmündet. Durch diese Kanäle kann somit ohne zusätzliche Rohrleitungen Schmieröl oder dgl. zum Kolbenbolzen geführt werden, wobei hierzu die Zuführungskanäle in den Bohrungen für die durchgeführten Schrauben jeweils mit einer sichelförmigen Ausnehmung an der Lagerbohrung des Pleuelauges ausgeführt sind, die in einer Überflußverbindung mit den Zuführungskanälen in den Schraubenbohrungen stehen. Gleichzeitig kann das Schmieröl über eine Schrägbohrung zum Kolben zur Kühlung geleitet werden.

Ein Ausführungsbeispiel der Erfindung ist in den Zeichnungen dargestellt und wird im folgenden näher beschrieben. Es zeigen:

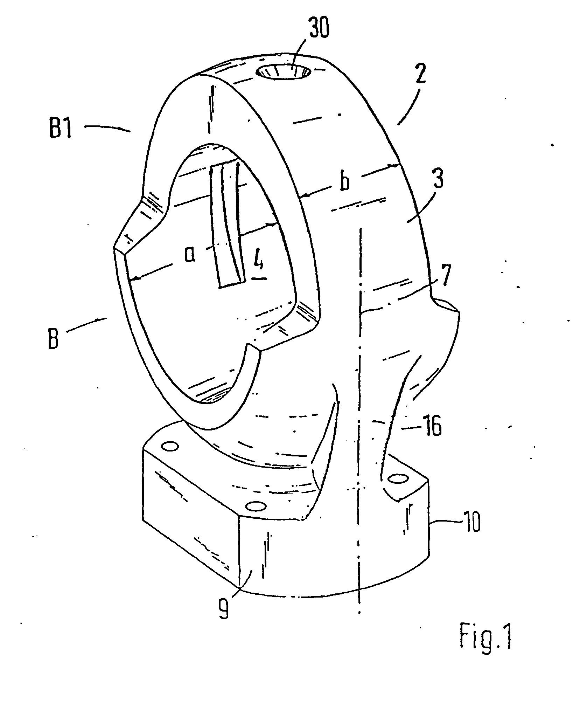

- Fig. 1: eine Darstellung eines Pleuelkopfes,
- Fig. 2: eine Ansicht auf den Pleuelkopf mit angeschraubter Pleuelstange, teilweise im Schnitt, der auf der linken Zeichnungshälfte durch eine verstärkungsrippe und auf der rechten Zeichnungshälfte durch einen Freiraum verläuft und
- Fig. 3: einen Schnitt nach der Linie III-III der Fig. 2 durch den Pleuelkopf im Bereich der Rippen.

Die Pleuelstange 1 umfaßt im wesentlichen einen oberen Pleuelkopf 2 mit einem Pleuelauge 3, in dem in einer Lagerbohrung 4 ein Kolbenbolzen 5 eines Motorkolbens gehalten wird. Der Pleuelkopf 2 ist mit der Pleuelstange 1 über zwei durchgeführte Gewindestangen 6,7 sowie weiteren kurzen Schrauben 8 verbunden. Der Pleuelkopf 2 ist etwa als kreisförmiges Segment ausgebildet und weist einen angeformten Befestigungsflansch 9 auf, der einem Befestigungsflansch 10 der Pleuelstange 1 gegenübersteht.

Zum Verbinden des Pleuelkopfes 2 mit der Pleuelstange 1 sind die zwei durchgeführten Gewindestangen 6, 7 zu beiden Seiten des Pleuelauges 4 angeordnet und erstrecken sich durch Verstärkungsrippen 15,16 vom oberen freien Ende der Pleuelstange 1 bis in den Pleuelkopf 2 und sind in einem Gewindeabschnitt 11 des Pleuelkopfes 2 einschraubbar. Die Gewindestangen 6,7 sind in einer quer zur Lagerbohrung 4 des Pleuelauges verlaufenden senkrechten Mittenebene X-X angeordnet. Die Lagerbohrung 4 des Pleuelauges 3 ist vorzugsweise mit einer Bleibronze ausgegossen, so daß eine separate Lagerbuchse entfallen kann.

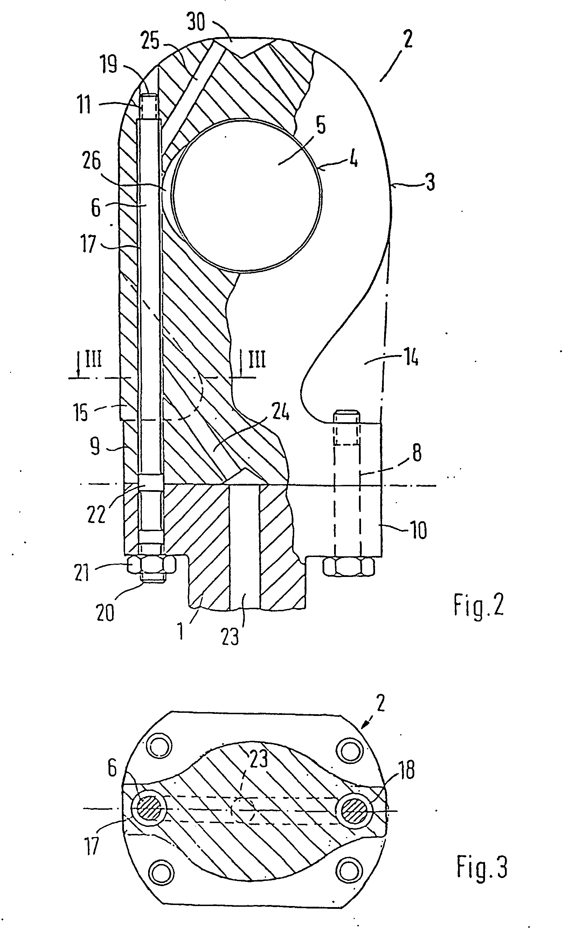

An dem Pleuelkopf 2 ist im unteren Bereich der Befestigungsflansch 9 angeformt, der zum kreisförmigen Segment des Kopfes 2 einen umfangseitigen Freiraum 14 aufweist, in dem mindestens die zwei Versteifungsrippen 15,16 angeordnet sind, welche den Raum 14 zwischen dem Kopf 2 und dem Befestigungsflansch 9 ausfüllen. In Fig. 2 ist in der Darstellung eine Versteifungsrippe 15 und um 90° hierzu versetzt ein Freiraum 14 in einer Darstellung gezeigt. Der Schnitt gemäß Fig. 3 zeigt dagegen den Pleuelkopf 2 mit zwei in einer Mittenebene X-X dargestellten Versteifungsrippen 15,16.

Zum vorgespannten Verbinden des Pleuelkopfes 2 mit der Pleuelstange 1 über die Gewindestangen 6,7 sind diese mit ihrem einen freien Ende 19 im Gewindeabschnitt II gehalten und werden mit ihrem anderen abgekehrten freien Ende 20 jeweils über eine Schraubenmutter 21 an dem Befestigungsflansch 10 der Pleuelstange 1 festgesetzt. Durch die Anordnung der Gewindestangen 6,7 in den Versteifungsrippen 15,16 kann eine maximale Vorspannung auf diese Gewindestangen 6,7 ausgeübt werden, so daß diese elastisch gedehnt anzuordnen sind. Im Bereich der Verbindungsebene Y-Y zwischen den beiden Befestigungsflanschen 9,10 sind die Schrauben 6,7 mit einem zylindrischen Paßabschnitt 22, der auch in anderen Bereichen vorgesehen sein kann, ausgebildet.

Die Bohrungen 17,18 für die Gewindestangen 6,7 sind im Durchmesser größer ausgeführt als die Schraubendurchmesser und bilden somit Zuführungskanäle für Schmieröl und dgl. Die Zuförderung von Schmieröl erfolgt über einen Kanal 23 in der Pleuelstange 1, an den sich ein schräg geführter weiterer Kanal 24 im Pleuelkopf 2 anschließt, der an die von den Bohrungen 17,18 gebildeten Zuführungskanälen anschließt. Ein Auslaßkanal 25 ist im Kopf 2 im Bereich oberhalb der Lagerbohrung 4 vorgesehen und mündet in eine außenliegende Vertiefung 30 des Pleuelkopfes 2 ein.

Zur Schmierung des Kolbenbolzens 5 sind die Bohrungen 17, 18 jeweils mit einer sichelförmigen Ausnehmung 26 in der Lagerbohrung 4 versehen, welche in einer Überflußverbindung mit den Zuführkanälen der Bohrungen 17,18 stehen.

Der untere mit dem Befestigungsflansch 9 verbundene Bereich B des Pleuelkopfes 2 weist gegenüber einem oberen Bereich B 1 eine längere Lagerbohrung 4 mit dem Maß a als die Lagerbohrung 4 des oberen Bereichs B mit dem Maß b auf, so daß optimale Abstützung des Kolbenbolzens gegeben ist.

## Patentansprüche

1. Pleuelstange (1) mit einem verbundenen Pleuelkopf (2), der auf einem Kolbenbolzen eines Motorkolbens einer Brennkraftmaschine, insbesondere eines Dieselmotors, gehalten ist, wobei Pleuelstange (1) und Pleuelkopf (2) über zugeordnete Befestigungsflansche (9, 10) durch Schrauben (8) verbunden sind und der Pleuelkopf (2) einteilig mit einem Befestigungsflansch (9) für die Pleuelstange (1) ausgebildet ist, **dadurch gekennzeichnet, dass** die Pleuelstange (1) zusätzlich mit dem Bereich (B1) des Pleuelkopfes (2), der oberhalb der Achse des Pleuelauges (3) liegt durch zwei Gewindestangen und zwei Muttern (21) vorgespannt ist, wobei sich die Gewindestangen (6, 7) jeweils an einer Seite des Pleuelauges (3) durchgehend vom oberen freien Ende der Pleuelstange (1) bis in den Bereich des Pleuelkopfes (2) in einer quer zur Lagerbohrung (4) des Pleuelauges (3) angeordneten Ebene oberhalb der Achse des Pleuelauges (3) erstrecken und die durchgehenden Gewindestangen (6,7) in Versteifungsrippen (15,16) des Pleuelkopfes (2) angeordnet sowie im oberen Bereich (B1) des Pleuelkopfes (2) über Gewinde (11) einstellbar festlegbar sind.

2. Pleuelstange nach Anspruch 1, **dadurch gekennzeichnet, daß** zwischen dem Pleuelkopf (2) und dem Befestigungsflansch (9) Versteifungsrippen (15,16) angeformt sind, in denen Durchgangsbohrungen (17,18) angeordnet, deren Durchmesser größer als die der Gewindestangen (6,7) zur Bildung von Zuführungskanälen für Schmiermittel sind.

3. Pleuelstange nach Anspruch 1 oder 2, **dadurch gekennzeichnet, daß** der Pleuelkopf (2) aus einem etwa kreisförmigen Segment besteht, welches mit einem unteren Umfangsbereich (B) am Befestigungsflansch (9) angeformt ist und die Versteifungsrippen (15,16) in einer Mittenquerebene (X-X) des Pleuelkopfes (2) angeordnet sind.

4. Pleuelstange nach einem der Ansprüche 1 bis 3, **dadurch gekennzeichnet, daß** die Gewindestangen (6,7) sich jeweils mit einem unteren freien Ende (20) an einem Befestigungsflansch (10) der Pleuelstange (1) abstützen und über eine Schraubenmutter (21) vorspannbar sind und zwischen diesen Gewindestangen (6,7) weitere Schrauben (8) angeordnet sind, welche die Befestigungsflansche (10,9) der Pleuelstange (1) und des Pleuelkopfes (2) miteinander verbinden.

5. Pleuelstange nach einem der Ansprüche 1 bis 4, **dadurch gekennzeichnet, daß** ein an den Versteifungsrippen (15,16) und dem Befestigungsflansch (9) angeformter Kreisabschnitt (B) des Pleuelkopfes (2) eine erste Hälfte der Lagerbohrung (4) aufweist, die eine Länge (a) besitzt, welche länger ist als die oberhalb der Versteifungsrippen (14, 15) ausgebildete zweite Hälfte der Lagerbohrung (4) mit der Länge (b) im oberen Kreisabschnitt (B1) des Pleuelkopfes (2).

6. Pleuelstange nach einem oder mehreren der vorhergehenden Ansprüche, **dadurch gekennzeichnet, daß** die als Zuführungskanäle ausgebildeten Bohrungen (17,18) für die Gewindestangen (6, 7) jeweils mit einem weiteren Zuführungskanal (23) von der Pleuelstange (1) sowie einem daran anschließenden Kanal (24) im Pleuelkopf (2) verbunden sind, der im Bereich der Versteifungsrippen (15,16) jeweils in die von den Bohrungen (17,18) gebildeten Zuführungskanäle einmündet.

7. Pleuelstange nach einem oder mehreren der vorhergehenden Ansprüche, **dadurch gekennzeichnet, daß** die Zuführungskanäle in den Bohrungen (17,18) für die Gewindestangen (6,7) jeweils mit einer sichelförmigen Ausnehmung (26) in der Lagerbohrung (4) des Pleuelauges (3) ausgeführt sind, welche jeweils in einer Verbindung mit den Bohrungen (17,18) zur Kolbenzuführung stehen.

8. Pleuelstange nach einem oder mehreren der vorhergehenden Ansprüche, **dadurch gekennzeichnet, daß** die Zuführungskanäle der Bohrungen (17,18) mit einem Abflußkanal (25) etwa unterhalb des Gewindeabschnitts (11) in Verbindung stehen, der nach außerhalb des Pleuelkopfes (2) zu einer außenliegenden Vertiefung (30) im Pleuelkopf (2) geführt ist.

9. Pleuelstange nach Anspruch 1, **dadurch gekennzeichnet, daß** die Lagerbohrung (4) des Pleuelauges (3) im Pleuelkopf (2) mit Bleibronze ausgegossen ist.

## Claims

1. Connecting rod (1) with a connected connecting rod small end (2) which is retained on a piston pin of an engine piston of an internal combustion engine, in particular of a diesel engine, wherein the connecting rod (1) and the connecting rod small end (2) are connected by means of associated attachment flanges (9, 10) through screws (8), and the connecting rod small end (2) is formed in one piece with an attachment flange (9) for the connecting rod (1), **characterised in that** the connecting rod (1) is additionally preloaded by way of the region (B1) of the connecting rod small end (2) lying above the axis of the connecting rod eye (3) by two threaded rods and two nuts (21), wherein the threaded rods (6, 7) in each case extend continuously on one side of the connecting rod eye (1) from the upper free end of the connecting rod (1) into the region of the connecting rod small end (2) in a plane disposed transversely to the bearing bore (4) of the connecting rod eye (3) above the axis of the connecting rod eye (3), and the continuous threaded rods (6, 7) are disposed in stiffening ribs (15, 16) of the connecting rod small end (2) and can be secured in an adjustable manner in the upper region (B1) of the connecting rod small end (2) by means of threads (11) .

2. Connecting rod according to claim 1, **characterised in that** stiffening ribs (15, 16) are formed on between the connecting rod small end (2) and the attachment flange (9), in which ribs through-bores (17, 18) are disposed, the diameter of which is greater than that of the threaded rods (6, 7) in order to form supply ducts for lubricant.

3. Connecting rod according to claim 1 or 2, **characterised in that** the connecting rod small end (2) consists of an approximately circular segment which is formed by way of a lower circumferential region (B) on the attachment flange (9), and the stiffening ribs (15, 16) are disposed in a central transverse plane (X-X) of the connecting rod small end (2).

4. Connecting rod according to any one of claims 1 to 3, **characterised in that** the threaded rods (6, 7) are in each case supported by way of a lower free end (20) at an attachment flange (10) of the connecting rod (1) and can be preloaded by means of a screw nut (21), and further screws (8) are disposed between these threaded rods (6, 7), which screws connect the attachment flanges (10, 9) of the connecting rod (1) and of the connecting rod small end (2) together.

5. Connecting rod according to any one of claims 1 to 4, **characterised in that** a circular segment (B), which is formed on the stiffening ribs (15, 16) and the attachment flange (9), of the connecting rod small end (2) comprises a first half of the bearing bore (4) which is of a length (a) which is longer than the second half, which is formed above the stiffening ribs (14, 15), of the bearing bore (4) having the length (b) in the upper circular segment (B1) of the connecting rod small end (2).

6. Connecting rod according to one or more of the preceding claims, **characterised in that** the bores (17, 18), which are formed as supply ducts, for the threaded rods (6, 7) in each case communicate with a further supply duct (23) of the connecting rod (1) as well as a duct (24), adjoining the duct (23), in the connecting rod small end (2), which duct (24) leads into each of the supply ducts, formed by the bores (17, 18), in the region of the stiffening ribs (15, 16).

7. Connecting rod according to one or more of the preceding claims, **characterised in that** the supply ducts in the bores (17, 18) for the threaded rods (6, 7) are in each case implemented with a crescent-shaped recess (26) in the bearing bore (4) of the connecting rod eye (3), which recesses in each case communicate with the bores (17, 18) for supplying the piston.

8. Connecting rod according to one or more of the preceding claims, **characterised in that** the supply ducts of the bores (17, 18) communicate with an outlet duct (25) approximately below the threaded portion (11), which duct is routed outside of the connecting rod small end (2) to an outer depression (30) in the connecting rod small end (2).

9. Connecting rod according to Claim 1, **characterised in that** the bearing bore (4) of the connecting rod eye (3) in the connecting rod small end (2) is lined with lead bronze.

## Revendications

1. Bielle (1) comportant un pied de bielle (2) rapporté qui est lié à un axe de piston d'un piston d'un moteur à combustion interne, plus particulièrement d'un moteur diesel, la bielle (1) et le pied de bielle (2) étant liés au moyen de brides d'assemblage (9, 10) associées par des vis (8), le pied de bielle (2) étant réalisé d'une pièce avec une bride d'assemblage (9) pour la bielle, **caractérisée par le fait que** la bielle (1) est en outre précontrainte avec la partie (B1) du pied de bielle (2) située au-dessus de l'axe de l'oeil de bielle (3) au moyen de deux tirants (6, 7) et deux écrous (21), les tirants (6, 7) s'étendant chacun d'un côté de l'oeil de bielle (3), d'une pièce, depuis l'extrémité libre supérieure de la bielle (1) jusque dans la région du pied de bielle (2), dans un plan transversal à de l'alésage (4) de l'oeil de bielle (3) situé au-dessus de l'axe dudit oeil de bielle (3), les tirants continus (6, 7) étant disposés dans des nervures de rigidification (15, 16) et étant ancrés avec possibilité de réglage au moyen de filetages (11) à la partie supérieure (B1) du pied de bielle (2).

2. Bielle selon la revendication 1, **caractérisée par le fait qu'**entre le pied de bielle (2) et la bride d'assemblage (9) sont aménagées des nervures de rigidification (15, 16), dans lesquelles sont prévus des trous débouchants (17,18) d'un diamètre supérieur au diamètre des tirants (6, 7) pour former des canaux d'alimentation pour le lubrifiant.

3. Bielle selon la revendication 1 ou 2, **caractérisée par le fait que** le pied de bielle (2) se compose d'un segment sensiblement circulaire, qui est lié par une portion de circonférence (B) inférieure à la bride d'assemblage (9), et que les nervures de rigidification (15, 16) sont disposées dans un plan médian transversal (X-X) du pied de bielle (2).

4. Bielle selon une des revendications 1 à 3, **caractérisée par le fait que** les tirants (6, 7) prennent appui chacun par une extrémité (20) libre inférieure sur une bride d'assemblage (10) de la bielle (1) et peuvent être précontraints à l'aide d'un écrou (21) et qu'entre ces tirants (6, 7) sont disposées des vis (8) supplémentaires qui lient entre elles les brides d'assemblage (10, 9) de la bielle (1) et du pied de bielle (2).

5. Bielle selon une des revendications 1 à 4, **caractérisée par le fait qu'**un secteur de cercle (B) du pied de bielle (2) lié aux nervures de rigidification (15, 16) et à la bride d'assemblage (9) contient une première moitié de l'alésage de palier (4) dont la longueur (a) est supérieure à la longueur (b) de la seconde moitié de l'alésage de palier (4), au-dessus des nervures de rigidification (14, 15) dans le secteur de cercle (B1) supérieur du pied de bielle (2).

6. Bielle selon une ou plusieurs des revendications précédentes, **caractérisée par le fait que** les trous (17, 18) pour le tirants (6, 7) communiquent chacun avec un canal d'alimentation (23) supplémentaire de la bielle (1) et avec un canal (24) contigu dans le pied de bielle (2) qui débouche dans les canaux d'alimentation formés par les trous (17, 18), dans la région des nervures de rigidification (17, 18).

7. Bielle selon une ou plusieurs des revendications précédentes, **caractérisée par le fait que** les canaux d'alimentation des trous (17, 18) pour les tirants (6, 7) présentent chaque fois une ouverture en forme de croissant dans l'alésage (4) du pied de bielle (3), qui communique chaque fois avec les trous (17, 18) pour l'alimentation du piston.

8. Bielle selon une ou plusieurs des revendications précédentes, **caractérisée par le fait que** les canaux d'alimentation des trous (17, 18), sensiblement en-dessous de la portion filetée (11), communiquent avec un canal d'écoulement (25) qui mène vers l'extérieur du pied de bielle (2) à une dépression (30) extérieure dans le pied de bielle (2).

9. Bielle selon la revendication 1, **caractérisée par le fait que** l'alésage de palier (4) de l'oeil de bielle est revêtu de bronze au plomb.
